# EUROPÄISCHE PATENTSCHRIFT

(11) **EP 4 490 424 B1**
(45) Veröffentlichungstag und Bekanntmachung des Hinweises auf die Patenterteilung: **24.06.2026**
(21) Anmeldenummer: 23703442.6
(22) Anmeldetag: 03.02.2023
(51) Int. Cl.: F16L 59/075, F16L 59/08, F16L 59/14, F16L 59/065, F16L 59/153

(54) **ISOLIERUNG FÜR EINE KRYOGENE LEITUNGSANORDNUNG, TRÄGERELEMENT, ISOLIERTE LEITUNGSANORDNUNG UND VERFAHREN ZUM ISOLIEREN EINER SOLCHEN**
INSULATOR FOR A CRYOGENIC CONDUIT ASSEMBLY, CARRIER ELEMENT, INSULATED CONDUIT ASSEMBLY AND METHOD FOR INSULATING SAME
ISOLANT POUR ENSEMBLE CONDUIT CRYOGÉNIQUE, ÉLÉMENT DE SUPPORT, ENSEMBLE CONDUIT ISOLÉ ET PROCÉDÉ D'ISOLATION DE CELUI-CI

(30) Priorität: 07.03.2022 DE 102022105275
(43) Veröffentlichungstag der Anmeldung: 15.01.2025
(60) Teilanmeldung: 26172242.5
(73) Patentinhaber: Witzenmann GmbH, 75175 Pforzheim (DE)
(72) Erfinder: EHRENBERGER, David, 75203 Königsbach-Stein (DE)
(74) Vertreter: LBP Lemcke, Brommer & Partner Patentanwälte mbB
(86) Internationale Anmeldenummer: PCT/EP2023/052725
(87) Internationale Veröffentlichungsnummer: WO 2023/169748

(56) Entgegenhaltungen:
- AT-B- 300 065
- DE-A1- 3 532 714
- FR-A- 656 724
- US-B2- 10 161 557

## Beschreibung

Die Erfindung betrifft mit dem Anspruch 1 eine Isolierung für eine kryogene Leitungsanordnung.

Anspruch 5 betrifft eine isolierte Leitungsanordnung mit einer solchen Isolierung, und Anspruch 14 betrifft ein Verfahren zum Isolieren einer Leitungsanordnung unter Verwendung einer solchen Isolierung.

Um kryogene Leitungsanordnungen, insbesondere zum Leiten von flüssigem Wasserstoff, gegenüber der Umgebung thermisch zu isolieren, ist nach dem Stand der Technik vorgesehen, eine Vakuumisolierung zwecks Unterbindung von Wärmeleitung und Konvektion mit einer sogenannten Multi-Layer-Insulation (MLI) zu kombinieren. Die MLI weist dabei mindestens eine Materiallage auf, die zur Unterbindung von Wärmeeintrag durch Strahlung ausgebildet ist, insbesondere regelmäßig eine Metalllage. Typischerweise wird die MLI in Schichten abwechselnd mit Abstandshalterfolien auf eine Innenleitung der kryogenen Leitungsanordnung aufgewickelt. Die genannte Innenleitung ist regelmäßig mittels sogenannter Abstandshalter in einer Außenleitung gelagert, welche Abstandshalter dafür sorgen, dass nur ein geringer Kontakt zwischen Innenleitung und Außenleitung besteht.

Nachteilig bei einem solchen Stand der Technik ist anzusehen, dass bislang keine Leitungsanordnungen für kryogene Anwendungen bekannt sind, die unter automotiven Randbedingungen, d.h. solchen Randbedingungen, wie sie bei Automobilanwendungen typischerweise auftreten, eine ausreichend lange Lebensdauer besitzen. Insbesondere unter Schwingbelastung ist Verschleiß der MLI und eine Verschiebung der einzelnen Lagen durch infinitesimal kleine lokale Reibwertunterschiede zu erwarten, wodurch auch die Isolierwirkung negativ beeinträchtigt wird.

Wenn die MLI durch Wickeln auf der Innenleitung befestigt wird, besteht zudem nach dem Stand der Technik das grundlegende Problem, dass auf diese Weise eine gegen Strahlung wirksame Materiallage aus dem Bereich der Innenleitung bis in den Bereich der Außenleitung durchläuft, sodass in nachteiliger Weise ein Wärmeleitungspfad geschaffen ist, welche die Isolierwirkung negativ beeinträchtigt.

US 10,161,557 B2 offenbart eine Transferleitung für kryogene Flüssigkeiten. Diese Transferleitung besteht auf herkömmliche Weise aus einem röhrenförmigen Außenmantel, in dem eine Anzahl von Innenrohren untergebracht sind, die jeweils für den Transport von kryogenen Flüssigkeiten vorgesehen sind. Der Außenmantel enthält einen zylinderförmigen Wärmeschutz, der eine isolierende Wand um die inneren Rohre bildet. Der Wärmeschutz schützt die Rohre vor externer Strahlung bei 300 K und besteht vorzugsweise aus Aluminium, Kupfer oder einem anderen geeigneten Material.

DE 35 32 714 A1 offenbart eine Superisolierung, die gleichzeitig als Distanzhalterung zwischen zwei druckbelastbaren Flächen dient, wobei sich kreuzende Stege in mindestens zwei Schichten unter Zwischenlage von reflektierenden Folien vorgesehen sind. Dabei ist vorgesehen, die reflektierenden Folien nicht zu unterteilen, damit eine flächig durchgehende Superisolierung ohne Strahlungsfenster gewahrt bleibt.

AT 300065 B offenbart ein koaxiales Rohrsystem aus mindestens zwei konzentrischen Rohren und einem zwischen den Rohren bestehenden Temperaturgefälle, beispielsweise ein in supraleitendem Zustand betriebenes elektrisches Kabel oder ein Rohrsystem für den Transport erwärmter oder gekühlter, flüssiger oder gasförmiger Medien, wobei die Rohre durch gesonderte Abstandshalter in konzentrischer Lage zueinander gehalten werden.

FR 656 724 A offenbart eine Hülle oder einen Mantel, der in einem bestimmten Abstand von einem zu isolierenden Rohr angebracht ist. Zwischen dem Rohr und der Hülle ist die Isolierung angeordnet. Der Abstand zwischen dem Rohr und der Hülle wird durch voneinander unabhängige Abstandshalter aufrechterhalten. Die Abstandshalter ruhen auf dem Rohr und vorzugsweise auch auf dem Mantel an nur wenigen Stellen, um die Wärmeübertragung vom Rohr auf den Mantel und folglich über die Abstandshalter nach außen zu reduzieren. Zur Montage sind die Abstandshalter mit Ausnehmungen versehen, durch die ein Befestigungsband geführt ist. Das Befestigungsband kann fest angezogen werden, um die Abstandshalter auf dem Rohr zu fixieren.

Es besteht Bedarf an einer verbesserten kryogenen Leitungsanordnung, die sich auch für typische Belastungen im Automobilbereich eignet und dabei eine ausreichende Lebensdauer besitzt. In diesem Zusammenhang sind folgende Aspekte relevant: Erhaltung des Vakuums im Zwischenraum zwischen Innenleitung und Außenleitung; druckfreie Einbringung und Lagerung der MLI; sichere Lagerung der Innenleitung in der Außenleitung; Gewährleistung einer Biegebewegung mit geringem Verschließ der MLI; keine Zerstörung der MLI durch Bewegungen; Schaffung einer Geometrie zur günstigen Evakuierung des Zwischenraums; und Gewährleistung einer günstigen automatisierten Montierbarkeit.

Die zuerst genannte Aufgabe wird erfindungsgemäß gelöst durch eine Isolierung mit den Merkmalen des Anspruchs 1, durch eine isolierte Leitungsanordnung mit einer Isolierung gemäß Anspruch 5 sowie durch ein Verfahren zum Isolieren einer Leitungsanordnung gemäß Anspruch 14.

Vorteilhafte Weiterbildungen der Erfindung sind in den jeweils zugehörigen Unteransprüchen definiert.

Eine erfindungsgemäße Isolierung für eine kryogene Leitungsanordnung weist auf: eine Grundfolie; eine Schirmfolie; welche Grundfolie aus einem Material mit geringer Wärmeleitfähigkeit von vorzugsweise etwa 0,01 bis 0,3 W/(m·K) gebildet ist; welche Schirmfolie zur Reflektion von Strahlung im Infrarotbereich ausgebildet ist, vorzugsweise bei einer Wellenlänge von 0,78 bis 1000 µm, höchst vorzugsweise 3 bis 50 µm; wobei die Schirmfolie in Form von mehreren diskreten Abschnitten auf der Grundfolie angeordnet ist, sodass zwischen zwei benachbarten Abschnitten jeweils ein freier Abstand verbleibt.

Durch den genannten freien Abstand lässt sich erreichen, dass beim Wickeln der Isolierung auf die Innenleitung einer Leitungsanordnung keine Lage der Schirmfolie durchgehend von innen bis nach außen verläuft und auf diese Weise einen nachteiligen Wärmeleitungspfad bildet.

Wenn vorliegend von einer Grundfolie die Rede ist, beschränkt sich dies nicht auf Folien als solche, sondern schließt auch andere Trägermaterialien mit ein. Während eine Folie ein flächiges Erzeugnis ohne Löcher darstellt, sind im Rahmen der Erfindung alternativ beispielsweise auch ein Netz oder ein Textil einsetzbar.

Wenn vorliegend von einer Schirmfolie die Rede ist, beschränkt sich dies ebenfalls nicht auf Folien als solche. Beispielsweise kann die Schirmfolie auch als eine (bereichsweise) Beschichtung der Grundfolie (bzw. des Trägermaterials) ausgebildet sein.

Eine mögliche konkrete Ausgestaltung wäre also eine nicht durchgängig metallisierte Kunststofffolie.

Bei einer ersten Weiterbildung der erfindungsgemäßen Isolierung kann vorgesehen sein, dass die Schirmfolie auf die Grundfolie aufgeklebt oder durch Nähen, Falzen oder Clinchen auf der Grundfolie befestigt ist. Auf diese Weise ist der Erfindungsgegenstand besonders einfach und kostengünstig herzustellen.

Alternativ kann die Grundfolie mit dem Material der Schirmfolie bereichsweise beschichtet sein, wie bereits angemerkt wurde.

Eine andere Weiterbildung der erfindungsgemäßen Isolierung sieht vor, dass die Schirmfolie in Form von Streifen auf der Grundfolie angeordnet ist, vorzugsweise in Form regelmäßig angeordneter Streifen mit jeweils gleicher Breite und/oder mit gleichem, konstantem Abstand zwischen den Streifen. Diese Weise lässt sich leicht der geforderte freier Abstand erreichen, wobei die Isolierung weiterhin einfach und kostengünstig zu fertigen ist

Es hat sich als besonders günstig erwiesen, wenn bei einer entsprechenden Weiterbildung der erfindungsgemäßen Isolierung das Material für die Grundfolie ein Glasfaservlies oder ein Kunststoff(-textil), insbesondere DuPont^{™} Kapton^{®} Polyimid, PET, PCV, ... ist. Alle diese Materialien weisen die geforderte geringe Wärmeleitfähigkeit bei ausreichender Flexibilität, einfacher Verarbeitbarkeit, niedrigem Preis und guter Verfügbarkeit auf.

Es hat sich weiterhin als besonders günstig erwiesen, wenn bei einer anderen Weiterbildung der erfindungsgemäßen Isolierung das Material für die Schirmfolie ein reines Metall ist, vorzugsweise Kupfer, Aluminium, Gold oder Silber, oder wenn die Schirmfolie als eine metallisierte Kunststofffolie ausgebildet ist. Alle diese Materialien erreichen eine gute Unterbindung von Wärmeeinträgen durch Strahlung.

Als besonders vorteilhaft hat es sich erwiesen, wenn in Weiterbildung der erfindungsgemäßen Isolierung die Grundfolie ein Glasfaservlies und die Schirmfolie eine Aluminiumfolie ist, wobei vorzugsweise und ohne Beschränkung die Aluminiumfolie eine Dicke von etwa 0,05 mm und das Glasfaservlies eine Dicke von etwa 0,3 mm aufweist.

Zur einfachen und prozesssicheren Verwendung der genannten Isolierung wird gemäß einem weiteren Aspekt außerdem ein Trägerelement vorgeschlagen, welches Trägerelement entlang seiner Längserstreckung folgende Abschnitte aufweist: a) einen ersten Abschnitt, in dem das Trägerelement auf einer ersten Seite eine Anlagestruktur zum vorzugsweise formschlüssigen Anlegen an eine zu isolierende Innenleitung und auf einer der ersten Seite gegenüberliegenden zweiten Seite eine erste Verbindungsstruktur aufweist, vorzugsweise eine Ausnehmung; b) einen zweiten Abschnitt, in dem das Trägerelement auf der ersten Seite eine zweite Verbindungsstruktur zum vorzugsweise formschlüssigen Zusammenwirken mit der ersten Verbindungsstruktur auf der zweiten Seite aufweist, vorzugsweise einen Vorsprung; und c) einen dritten Abschnitt, in dem das Trägerelement auf der ersten Seite die zweite Verbindungsstruktur und auf der zweiten Seite eine Abstandhalterstruktur zum vorzugsweise formschlüssigen Zusammenwirken mit einer die Innenleitung umgebenden Außenleitung aufweist.

Ein solches Trägerelement lässt sich vorteilhafter Weise zusammen mit der Isolierung um die Innenleitung einer zu isolierenden Leitungsanordnung wickeln und sorgt auf diese Weise neben einer Lagerung und Beanstandung von Lagen der Isolierung zusätzlich noch für die Lagerung und Beanstandung der Außenleitung einer zu isolierenden Leitungsanordnung.

Um das Trägerelement gut wickeln zu können, und damit es auch den weiteren Anforderungen im Automobilbereich bzw. bei der Evakuierung, die regelmäßig bei relativ hohen Temperaturen in einem Bereich von 150 °C bis 200 °C erfolgt, gerecht werden zu können, sieht eine spezielle Weiterbildung vor, dass das Trägerelement in einem flexiblen, um die Innenleitung herum wickelbaren Material, vorzugsweise Kunststoff, höchst vorzugsweise PEEK (Polyetheretherketon), ausgebildet ist.

Als besonders vorteilhaft hat sich in der Praxis eine Ausgestaltung des Trägerelements erwiesen, welches a) in dem ersten Abschnitt auf der ersten Seite eben ausgebildet ist und auf der zweiten Seite eine Ausnehmung aufweist, oder welches in dem ersten Abschnitt auf der ersten Seite eine zu der Wellung eines Wellschlauchs zumindest teilweise komplementäre Ausgestaltung und auf der zweiten Seite eine Ausnehmung aufweist; und b) in dem zweiten Abschnitt auf der ersten Seite einen zu der Ausnehmung in dem ersten Abschnitt komplementären Vorsprung und auf der zweiten Seite eine Ausnehmung aufweist, vorzugsweise eine mit der Ausnehmung in dem ersten Abschnitt identische Ausnehmung; und c) in dem dritten Abschnitt auf der ersten Seite einen zu der Ausnehmung in dem zweiten Abschnitt komplementären Vorsprung und auf der zweiten Seite die Abstandhalterstruktur aufweist.

Auf diese Weise kann das Trägerelement mit dem ersten Abschnitt mit der Innenleitung - je nach deren Ausgestaltung - zusammenwirken, mit dem Vorsprung in dem zweiten Abschnitt mit der Ausnehmung des ersten Abschnitts zusammenwirken, und mit dem Vorsprung in dem dritten Abschnitt mit der Ausnehmung in dem zweiten Abschnitt zusammenwirken, während die Abstandhalterstruktur für die Lagerung der Außenleitung sorgt.

Vorzugsweise ist in diesem Zusammenhang weiter vorgesehen, dass das Trägerelement bei entsprechender Weiterbildung derart ausgebildet ist, dass bei einem spiralförmigen Aufwickeln des Trägerelements die erste Verbindungsstruktur in dem ersten Abschnitt und die zweite Verbindungsstruktur in dem zweiten Abschnitt und/oder die erste Verbindungsstruktur in dem zweiten Abschnitt und die zweite Verbindungsstruktur in dem dritten Abschnitt verbindend zusammenwirken, bevorzugt jeweils paarweise miteinander in Eingriff stehen. Erreicht werden kann dies über entsprechende relative Längen der einzelnen Abschnitte bezogen auf eine Abmessung, insbesondere den Außenumfang, einer zu isolierenden (Innen-) Leitung.

Als besonders vorteilhaft hat es sich erwiesen, wenn das Trägerelement bei entsprechender Weiterbildung so ausgebildet ist, dass zwischen den zusammenwirkenden Verbindungsstrukturen wenigstens eine Lage der Isolierung anordenbar ist. Die Isolierung kann auf diese Weise einfach fixiert und sicher gehalten werden.

Eine andere Weiterbildung des Trägerelements sieht vor, dass die Abstandhalterstruktur einen Durchbruch aufweist, welcher Durchbruch vorzugsweise quer zu einer Längserstreckung des Trägerelements und parallel zu den ersten und zweiten Seiten orientiert ist.

Ein solcher Durchbruch kann dazu dienen, ein fadenförmiges Element, beispielsweise einen Draht, durch die Abstandhalterstruktur bzw. mehrere solche Abstandhalterstrukturen von verschiedenen Trägerelementen hindurchzuführen, um diese vor dem Einbringen in die Außenleitung geeignet zu verformen, beispielsweise zu tordieren. Auf diese Weise lässt sich die Montage der Außenleitung vereinfachen.

Eine wieder andere Weiterbildung des Trägerelements sieht in diesem Zusammenhang vor, dass die Abstandhalterstruktur mit wenigstens einer seitlichen Ausnehmung versehen ist. Sie wird dadurch flexibler und lässt sich leichter verformen - insbesondere, wie vorstehend beschrieben.

Um die Wechselwirkung mit der regelmäßig, jedoch ohne Beschränkung als Wellschlauch ausgebildeten Außenleitung zu verbessern, kann eine wieder andere Weiterbildung des Trägerelements noch vorsehen, dass die Abstandhalterstruktur außen konvex oder mit einer zu der Wellung eines Wellschlauchs zumindest teilweise komplementärer Formgebung ausgebildet ist.

Es hat sich als besonders vorteilhaft erwiesen, wenn bei entsprechender Weiterbildung die erfindungsgemäße Isolierung als vorkonfektionierte Isolierung mit wenigstens einem bereits aufgebrachtem Trägerelement ausgebildet ist, weil hierdurch die Handhabung bei der Herstellung erleichtert wird.

Eine erfindungsgemäße isolierte Leitungsanordnung mit einer erfindungsgemäßen Isolierung weist auf: eine Innenleitung; eine Außenleitung; wobei die Isolierung spiralförmig umfänglich und mit einer axialen Verlaufskomponente, d.h. ähnlich wie ein Griffband bei einem Tennisschläger oder einem Fahrradlenker (schräg) um die Innenleitung gewickelt ist, und bei der die Außenleitung die Innenleitung und die Isolierung umgibt.

Auf diese Weise ergibt sich in radialer Richtung ein sicherer Schutz vor Wärmeeinträgen durch Strahlung, ohne dass es in nachteiliger Weise zu einem durchgängigen Leitungspfad käme.

Besonders bevorzugt ist eine Weiterbildung der isolierten erfindungsgemäßen Leitungsanordnung, bei der zusätzlich wenigstens ein Trägerelement Verwendung findet; bei der das Trägerelement zusammen mit der Isolierung um die Innenleitung gewickelt ist, wobei das Trägerelement bei einer bestimmten axialen Position spiralförmig auf die Innenleitung aufgewickelt ist, sodass zwischen zwei Wicklungen des Trägerelements jeweils eine Lage der Isolierung angeordnet ist, vorzugsweise eingeklemmt.

Das Trägerelement sorgt einerseits für eine Beanstandung der einzelnen Lagen bzw. Wicklungen der Isolierung und andererseits für deren sichere Fixierung nebst Lagerung und Beanstandung der Außenleitung.

Entsprechend ist bei einer anderen Weiterbildung der isolierten erfindungsgemä-ßen Leitungsanordnung vorgesehen, dass die Außenleitung außen an der Abstandhalterstruktur oder den Abstandhalterstrukturen anliegt.

Um eine gute Beweglichkeit der isolierten erfindungsgemäßen Leitungsanordnung zu gewährleisten, sieht eine andere Weiterbildung vor, dass die Isolierung entlang der Leitungsanordnung einen oder mehrere Falze aufweist, bevorzugt jeweils mindestens einen Falz zwischen zwei Trägerelementen. Die genannten Falze stellen eine Art Längenreserve zur Verfügung, um auf diese Weise Verformungen und Bewegungen der Leitungsanordnung zuzulassen.

Zusätzlich oder alternativ kann bei noch einer anderen Weiterbildung der erfindungsgemäßen Leitungsanordnung vorgesehen sein, dass die Isolierung entlang der Leitungsanordnung aus mehreren getrennten Abschnitten gebildet ist, welche Abschnitte sich kämmend überlappen und dadurch einen Schiebesitz bilden. Auf diese Weise ist für eine gute Verform- und Beweglichkeit der Leitungsanordnung gesorgt.

Es hat sich in der Praxis als besonders vorteilhaft erwiesen, wenn bei entsprechender Weiterbildung der erfindungsgemäßen Leitungsanordnung die Innenleitung und/oder die Außenleitung als Wellschlauch ausgebildet ist/sind, vorzugsweise als Ringwellschlauch, höchst vorzugsweise aus Metall, beispielsweise Stahl oder Edelstahl. Derartige Leitungen sind selbst bei dünner Wandstärke stabil und flexibel, eignen sich also in besonderer Weise für Anwendungen im Automobilbereich.

Um zusätzliche Stabilität und Druckfestigkeit zu erreichen, sieht noch eine andere Weiterbildung der erfindungsgemäßen Leitungsanordnung vor, dass die Innenleitung mit einer Geflechtummantelung versehen ist, vorzugsweise aus einem monofilen Geflecht, und dass die Isolierung oder - bei entsprechender Ausgestaltung - das Trägerelement um die Geflechtummantelung gewickelt ist.

Bevorzugt ist der Zwischenraum zwischen der Innenleitung und der Außenleitung evakuiert, um Wärmeeintrag durch Konduktion oder Konvektion zu unterbinden.

Ein erfindungsgemäßes Verfahren zum thermischen Isolieren einer Leitungsanordnung basiert auf der Verwendung einer erfindungsgemäßen Isolierung, wobei: a) die Isolierung spiralförmig umfänglich und mit einer axialen Verlaufskomponente um eine Innenleitung gewickelt wird; und dann b) eine Außenleitung um die Innenleitung und die Isolierung herum angeordnet wird.

Auf die hiermit erreichbaren Vorteile wurde weiter oben bereits detailliert hingewiesen. Darüber hinaus ist das erfindungsgemäße Verfahren in vorteilhafter Weise leicht und auch automatisiert ausführbar.

Eine vorteilhafte Weiterbildung des erfindungsgemäßen Verfahrens beinhaltet die Verwendung wenigstens eines Trägerelements, wobei in Schritt a) das Trägerelement zusammen mit der Isolierung um die Innenleitung gewickelt wird, wobei das Trägerelement bei einer bestimmten axialen Position spiralförmig vorzugsweise direkt auf die Innenleitung aufgewickelt wird, sodass eine Lage der Isolierung jeweils zwischen zwei Wicklungen des Trägerelements angeordnet wird, vorzugsweise eingeklemmt.

Auch auf die hiermit erreichbaren Vorteile wurde weiter oben bereits detailliert hingewiesen.

Noch eine andere Weiterbildung des erfindungsgemäßen Verfahrens sieht vor, dass vor Schritt b) die Abstandhalterstruktur des Trägerelements in ihrer radialen Erstreckung (bezogen auf die Leitungsanordnung) verringert wird, bevorzugt durch Torsion, wobei höchst vorzugsweise ein Zustand mit verringerter radialer Erstreckung erreicht und zumindest temporär fixiert wird, bevorzugt und bei entsprechender Ausgestaltung mittels eines fadenförmigen Elements, zum Beispiel ein Draht, das bzw. der durch den Durchbruch geführt wird, und dass nach Schritt b) die Verringerung der radialen Erstreckung beseitigt wird, insbesondere durch Entfernen des fadenförmigen Elements.

Hierdurch lässt sich die Herstellung einer erfindungsgemäßen Leitungsanordnung vereinfachen, weil die Außenleitung problemlos auf die Innenleitung mit der aufgewickelten Isolierung samt Trägerelement aufgezogen werden kann.

Bevorzugt wird der Zwischenraum zwischen Innen- und Außenleitung anschließend evakuiert, wie bereits angemerkt.

Vorliegend wird demnach vorzugsweise vorgeschlagen, eine (Schlauch-) Leitung mit einer Vakuumisolierung gegen Konduktion und einer Multi-Layer-Insulation (MLI) zur Unterbindung der Strahlung zu versehen.

Die Schlauchleitung kann optional zusätzlich mit beispielsweise einem Geflecht zur Druckabstützung versehen sein. Die MLI wird bevorzugt über durch ein Trägerelement gelagert/fixiert, wie bereits beschrieben. Das Trägerelement ist vorzugsweise aus einem Kunststoff, höchst vorzugsweise aus PEEK, hergestellt.

Das Trägerelement ist bei entsprechender Ausgestaltung in drei Abschnitte aufgeteilt, nämlich: 1) Fixierungsabschnitt, 2) Abschnitt zur Lagerung der MLI, 3) Abschnitt zur Lagerung der isolierten inneren Schlauchleitung in der Außenleitung (Abstandshalter mit Gleitelement für Montage und Bewegung).

Bei entsprechender Ausgestaltung weist das Trägerelement in Abschnitt 1) Wirkflächen auf, welche sich auf der Außenseite der inneren Schlauchleitung (Innenleitung) abstützen und in die Wellentäler der Schlauchleitung, welche wiederum vorzugsweise aus einem Ringwellschlauch besteht, eingreifen und das Trägerelement in axialer Richtung fixieren. Ist ein Geflecht verbaut, so kann das Trägerelement über einen Reibschluss auf dessen Oberfläche fixiert werden (beispielsweise durch Verwendung von Kabelbinder).

Weiterhin können an dem Trägerelement in Abschnitt 2) wechselseitig Wirkflächen angeordnet sein, welche mit der MLI ein Wirkflächenpaar bilden. Das Trägerelement kann bei einer entsprechenden Ausführung in dem Abschnitt 2) ein Profil aufweisen, welches durch einen Wickelprozess auf einen Volumenkörper (vorliegend die Innenleitung) formschlüssig in sich selbst eingreift und sich dadurch fixiert. Dies ist vergleichbar mit einem Keder oder einem Druckverschlussbeutel. Die entstehende Schnappverbindung kann eine oder mehrere Lagen der MLI im Fügespalt aufnehmen, in radialer Richtung beabstanden und fixieren.

Auch der Abschnitt 3) ist vorzugsweise mit Wirkflächen zum Eingriff in entsprechende Strukturen in dem Abschnitt 2) ausgestattet, weist aber bevorzugt in radialer Richtung zusätzliche Wirkflächen auf, welche vorzugsweise konvex ausgeführt sind und mit einer Wirkfläche an der Innenwand der Außenleitung eine Wirkflächenpaar bilden. Über dieses Paar kann die innere Leitung (Innenleitung) gelagert und die MLI vor Kontakt mit der Außenleitung bewahrt werden. Auf diese Weise sind außerdem Wirkflächen zur Einführung/Montage der Isolierten Innenleitung in die Außenleitung vorhanden. Die Wirkflächen mit Kontakt zur Außenleitung sind kleinstmöglich ausgeführt, um eine konduktive Wärmeübertragung nach Möglichkeit zu minimieren.

Bei entsprechender Ausgestaltung kann das Trägerelement in Abschnitt 3) weitere Wirkflächen aufweisen, welche bei Verwendung eines Ringwellschlauchs als Außenleitung formschlüssig in Kontakt zu Wirkflächen an den Innenflanken des Ringwellschlauchs treten. Hierdurch wird eine axiale Fixierung ermöglicht.

Darüber hinaus ist es möglich, wie weiter oben bereits beschrieben, dass Trägerelement in dem Abschnitt 3) durch beispielsweise Torsion im Durchmesser zu verringern, diese Position vorzugsweise über einen axial lösbaren Draht zu fixieren, und dadurch eine einfache Montage in der Außenleitung zu ermöglichen. Um nach Positionierung die Vorspannung zu lösen und Wirkflächenpaare zwischen Abschnitt 3) und der Außenleitung zur Fixierung der Leitungen relativ zueinander in Kontakt zu bringen, kann der axial lösbare Draht nach Positionierung ausgezogen werden, sodass die Wirkflächen in dem Abschnitt 3) mit Wirkflächen der Außenleitung in Kontakt treten und beide Elemente zueinander positioniert werden.

Diese radiale Beweglichkeit mit elastischer Vorspannung in dem Abschnitt 3) kann beispielsweise durch tangentiale Stege dargestellt werden, welche radial außen einen optional in Umfangsrichtung durchbrochenen Ring mit den Wirkflächen tragen (ähnlich wie bei einer Fahrradbremsscheibe). Unter Torsionsbelastung verbiegen sich die Stege, und der Ring verringert den Durchmesser.

Weiterhin ist es auch möglich, dass das Trägerelement in dem Abschnitt 3) optional mit Ausnehmungen in Umfangsrichtung versehen ist, sodass es bei der Montage in axialer Richtung verkippt, somit den Durchmesser reduziert und eine Montage ermöglicht. Eine geringfügige Rückbewegung der Innenleitung bewirkt ein Aufstellen in dem Abschnitt 3) und damit ein Verspannen in der Außenleitung oder ein Eingreifen in optional vorhanden Wellen der Außenleitung (nach Art einer Kralle).

Die MLI umfasst, wie bereits beschrieben, eine Grundfolie und eine Schirmfolie. Die Grundfolie besteht bevorzugt aus einem Werkstoff mit geringer Wärmeleitfähigkeit, vorzugsweise 0,01 bis 0,3 W/(m·K), wie beispielsweise einem Glasfaservlies oder einem Kunststoff(-textil). Dier Schirmfolie zur Reflektion von Strahlung im Infrarotbereich, vorzugsweise bei einer Wellenlänge von 0,78 bis 1000 µm, höchst vorzugsweise 3 bis 50 µm, ist vorzugsweise aus reinen Metallen ausgebildet, höchst vorzugsweise aus Kupfer, Aluminium, Gold oder Silber, worauf bereits hingewiesen wurde. Alternativ kann auch eine metallisierte Kunststofffolie als Schirmfolie eingesetzt werden, wobei hier die Metallisierung aus einem der genannten Metalle gebildet sein kann.

Die Schirmfolie ist erfindungsgemäß diskontinuierlich in Form von einzelnen Stücken oder Abschnitten auf der Grundfolie aufgebracht, um bei einer spiralförmigen Wicklung keinen durchgehenden konduktiven Wärmeleitpfad zu erhalten. Die Schirmfolienstücke bzw. -Abschnitte sind, vorzugsweise abhängig vom Radius bzw. Außenumfang des Werkstücks (Innenleitung), auf welchem das spezifische Schirmfolienstück nach erfolgter Montage verortet ist, in der Länge und dem Abstand zum benachbarten Stück angepasst, sodass durch die Spiralwicklung einzelne Schirmringe entstehen, die die Wärmestrahlung reflektieren.

Zur Sicherstellung der Flexibilität weist eine weitere Ausgestaltungsform der beschriebenen Erfindung eine MLI auf, welche zwischen den einzelnen Trägerelementen mit einem oder mehreren Falzen ausgeführt ist, worauf ebenfalls weiter oben bereits hingewiesen wurde. Die Falze ermöglichen eine axiale Längenänderung der MLI bei Biegung der Gesamtleitung (Leitungsanordnung).

Alternativ oder zusätzlich kann diese Funktion auch durch axial getrennte MLI-Elemente mit (jeweils wenigstens) einem Trägerelement dargestellt werden, wobei die MLI-Elemente sich kämmend überlappen und dadurch einen Schiebesitz bilden. Auch hierauf wurde weiter oben bereits hingewiesen.

Zur Montage der MLI wird vorgeschlagen, eine Schlauchleitung (Innenleitung), vorzugsweise aus einem Ringwellschlauch, mit einer Druckabstützung bestehend aus einem Geflecht, höchst vorzugsweise aus einem metallischen Geflecht, besonders bevorzugt aus einem monofilen Geflecht, als fluidführendes Leitungselement zu versehen. Dieses Leitungselement wird zur Stabilisierung innen mit einem Dorn versehen, welcher Dorn vorzugsweise aus einem Faserverbundwerkstoff, höchst vorzugsweise aus kohlenstofffaserverstärktem Kunststoff, hergestellt ist und eine hohe Steifigkeit aufweist. Zum Verspannen der Leitung auf dem Dorn kann auf dem Dorn ein elastisches Element vorgesehen sein, welches mit einem Innendruck beaufschlagt wird, sich dabei in radialer Richtung ausdehnt und dadurch die Leitung verspannt sowie zentriert. Zur verbesserten Zentrierung kann das elastische Element lokal am Dorn befestigt sein, sodass sich durch den Innendruck Längswellen ausbilden, die sich über den Umfang gleichmäßig ausformen.

Die MLI kann anschließend über einen Wickelprozess zusammen mit dem Trägerelement oder den Trägerelementen auf das Leitungselement aufgebracht werden. Abschließend wird die Außenleitung montiert, gegebenenfalls nachdem zuvor das Trägerelement bzw. die Trägerelemente in ihrem Außendurchmesser reduziert wurden, wie weiter oben beschrieben.

Die Erfindung schafft auf diese Weise eine erhöhte Flexibilität der MLI, verbunden mit der Integration von Distanzhaltern mit geringem Wärmeübergang, sowie die Möglichkeit zur automatisierten Montage.

Weitere Eigenschaften und Vorteile der Erfindung ergeben sich aus der nachfolgenden Beschreibung von Ausführungsbeispielen anhand der Zeichnung.
Figur 1 zeigt schematisch eine erfindungsgemäße Isolierung für kryogene Leitungsanordnungen;
Figur 2 zeigt schematisch ein Trägerelement in einer seitlichen Ansicht;
Figur 3 zeigt schematisch eine mögliche relative Anordnung von Isolierung und Trägerelement;
Figur 4 zeigt schematisch und im Längsschnitt eine mögliche Ausgestaltung der erfindungsgemäßen isolierten Leitungsanordnung mit einem zusätzlichen fadenförmigen Element; und
Figur 5 zeigt schematisch und im Längsschnitt eine weitere mögliche Ausgestaltung der erfindungsgemäßen isolierten Leitungsanordnung.

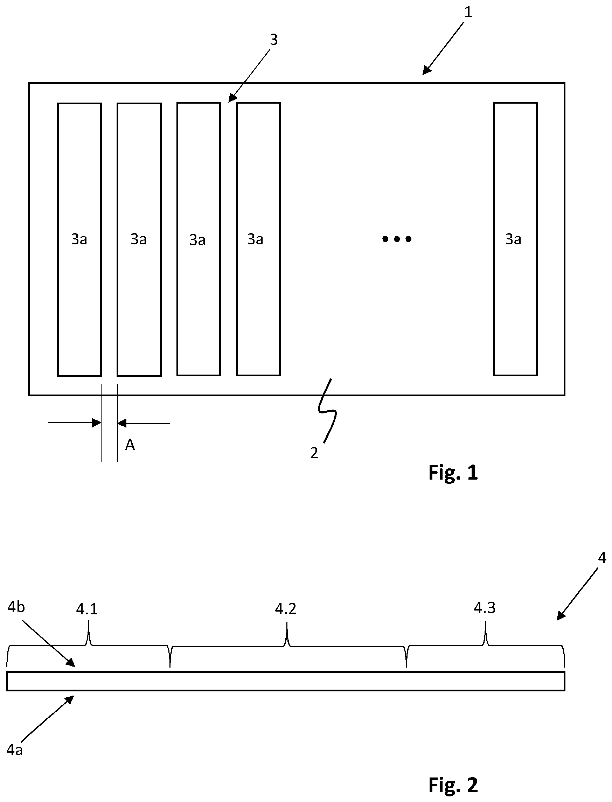

Figur 1 zeigt schematisch eine Isolierung für kryogene Leitungsanordnung, welche Isolierung insgesamt mit dem Bezugszeichen 1 bezeichnet ist. Dargestellt ist in Figur 1 einen Zustand der Isolierung 1 vor deren Verwendung zum Isolieren einer Leitungsanordnung, zu welchem Zweck die Isolierung 1 um die Leitungsanordnung gewickelt wird, worauf weiter unten noch genauer eingegangen wird.

Gemäß der Darstellung in Figur 1 umfasst die Isolierung 1 ein Trägermaterial in Form einer Grundfolie 2, welche Grundfolie 2 aus einem Material mit einer geringen Wärmeleitfähigkeit gebildet ist, vorzugsweise 0,01 bis 0,3 W/(m·K), vorzugsweise aus Glasfaservlies, welches sogar eine Wärmeleitfähigkeit von nur etwa 1,5 mW/(m·K) aufweisen kann. Weiterhin umfasst Isolierung 1 eine Schirmfolie 3, die zur Reflexion von Strahlung im Infrarotbereich ausgebildet ist, vorzugsweise bei einer Wellenlänge von 0,78 bis 1000 µm, höchst vorzugsweise 3 bis 50 µm. Die Schirmfolie 3 ist jedoch nicht in Form einer einzelnen, durchgängigen Lage auf die Grundfolie 2 aufgebracht, vorzugsweise durch Nähen, Falzen oder Clinchen, sondern besteht aus mehreren diskreten Abschnitten 3a, wobei zwischen zwei benachbarten Abschnitten 3a jeweils ein freier Abstand A verbleibt. Vorliegend weisen die Abschnitte 3a der Schirmfolie 3 eine rechteckige Form auf, wobei alle Abschnitte 3a dieselbe Form besitzen und zwischen zwei Abschnitten 3a jeweils derselbe freie Abstand A besteht. Die Erfindung ist jedoch grundsätzlich nicht auf derartige Anordnungen beschränkt. Beispielsweise können die Abschnitte 3a jeweils unterschiedliche Breiten, Formen und/oder Abstände zueinander aufweisen.

Wie schon erwähnt wurde, kommen außer (Grund-)Folien auch andere Trägermaterialien in Betracht. Die Schirmfolie kann in Form einer Beschichtung auf die Grundfolie bzw. das Trägermaterial aufgebracht sein.

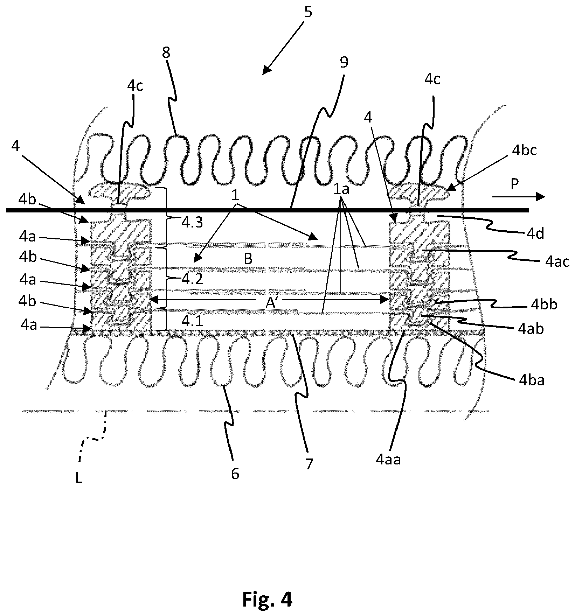

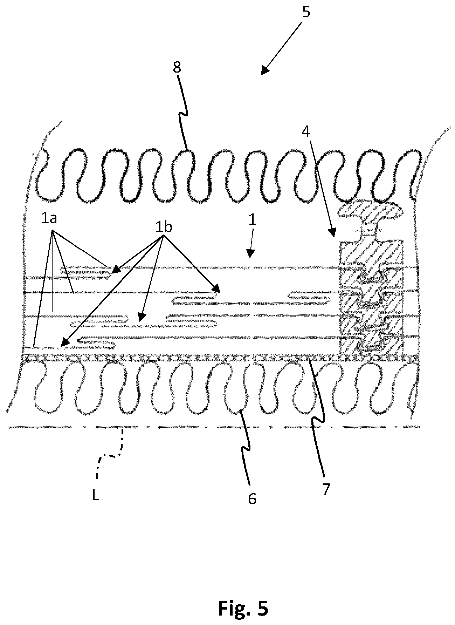

Figur 2 zeigt schematisch ein Trägerelement 4, welches Trägerelement 4 speziell zur Verwendung mit einer Isolierung gemäß Figur 1 ausgebildet und konzipiert ist. Das Trägerelement 4 weist entlang seiner Längserstreckung nacheinander folgende drei Abschnitte auf, die nachfolgend mit den Bezugszeichen 4.1 bis 4.3 bezeichnet sind:
a) einen ersten Abschnitt 4.1, in dem das Trägerelement 4 auf einer ersten Seite 4a eine Anlagestruktur zum Anlegen an eine (hier nicht gezeigt) zu isolierende Innenleitung und auf einer der ersten Seite 4a gegenüberliegenden zweiten Seite 4b eine erste Verbindungsstruktur aufweist, vorzugsweise eine Ausnehmung, welche erste Verbindungsstruktur in Figur 2 nicht erkennbar ist (vergleiche Figuren 4 und 5);
b) einen zweiten Abschnitt 4.2, in dem das Trägerelement 4 auf der ersten Seite 4a eine zweite Verbindungsstruktur (nicht erkennbar; vergleiche Figuren 4 und 5) zum Zusammenwirken mit der ersten Verbindungsstruktur auf der zweiten Seite 4b aufweist, vorzugsweise einen Vorsprung; und
c) einen dritten Abschnitt 4.3, in dem das Trägerelement 4 auf der ersten Seite 4a erneut die bereits genannte zweite Verbindungsstruktur und auf der zweiten Seite 4b eine Abstandhalterstruktur (nicht erkennbar; vergleiche Figuren 4 und 5) zum Zusammenwirken mit einer die Innenleitung umgebenden Außenleitung (hier nicht gezeigt) aufweist.

Bei bestimmungsgemäßer Verwendung wird das Trägerelement 4, welches bevorzugt aus PEEK hergestellt ist, mit der ersten Seite 4a in dem ersten Abschnitt 4.1 an eine zu isolierende Innenleitung angelegt und dann spiralförmig aufgewickelt, sodass insbesondere die erste Seite 4a in dem zweiten Abschnitt 4.2 mit der zweiten Seite 4b in dem ersten Abschnitt 4.1 und die erste Seite 4a in dem dritten Abschnitt 4.3 mit der zweiten Seite 4b in dem zweiten Abschnitt 4.2 in Wechselwirkung tritt. Der zweite Abschnitt 4.2 kann insbesondere länger ausgebildet sein als die Abschnitte 4.1 und 4.3, sodass beim Aufwickeln die erste Seite 4a in dem zweiten Abschnitt 4.2 auch mit der zweiten Seite 4b in dem zweiten Abschnitt 4.2 in Wechselwirkung tritt.

Das Trägerelement 4 kann zu seinen Enden hin eine abnehmende Dicke aufweisen, was in Figur 2 nicht dargestellt ist. Auf diese Weise ist beim Wickeln eine stetige Ausformung der (Außen-) Kontur des Trägerelements 4 erreichbar.

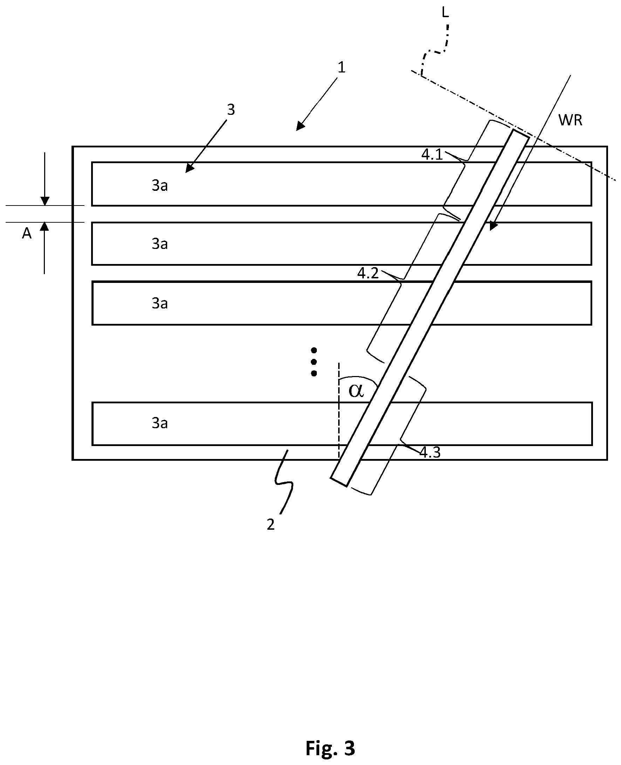

Figur 3 zeigt eine Möglichkeit des Zusammenwirkens von Isolierung 1 und Trägerelement 4. Das Trägerelement 4 ist unter einem Winkel α bezüglich einer Verlaufsrichtung der Abschnitte 3a der Schirmfolie 3 gemäß einer schräg verlaufenden Wickelrichtung WR der Isolierung 1 um eine zu isolierende (Innen-) Leitung angeordnet, welche Leitung in Figur 3 durch ihre Längsachse L symbolisiert ist. Die Wickelrichtung WR ist unter einem rechten Winkel bezüglich der Längsachse L orientiert, sodass das Trägerelement 4 bei einer festen axialen Position um die Leitung herum gewickelt wird.

Vorzugsweise ist der Winkel α möglichst klein und beträgt angenähert oder genau 0 (Null) Grad, sodass die Wickelrichtung WR der Isolierung 1 gerade quer zur Verlaufsrichtung der Abschnitte 3a der Schirmfolie 3 verläuft. In der Wickelrichtung WR kommt es so aufgrund der freien Abstände A zwischen den Abschnitten 3a - trotz ausreichender Abschirmwirkung gegen Wärmestrahlung nicht zu der Ausbildung eines durchgängigen (Wärme-)Leitungspfads.

Figur 4 zeigt schematisch und im Längsschnitt entlang der Längsachse L eine erfindungsgemäße isolierte Leitungsanordnung, die insgesamt mit dem Bezugszeichen 5 bezeichnet ist. Sie umfasst - radial von innen nach außen - eine als Ringwellschlauch ausgebildete Innenleitung 6, einen die Innenleitung 6 umgebenden Geflechtschlauch 7, mehrere in einem axialen Abstand A' zueinander angeordnete und spiralförmig aufgewickelte Trägerelemente 4 - auf deren genaue Ausgestaltung nachfolgend noch eingegangen wird -, mehrere Lagen 1a von zwei ebenfalls aufgewickelten Isolierungen 1 sowie eine als Ringwellschlauch ausgebildete Außenleitung 8. Durch entsprechende Durchbrüche 4c in den Trägerelementen 4 ist ein Draht 9 geführt, worauf ebenfalls weiter unten noch genauer eingegangen wird.

In Figur 4 sind die Trägerelemente 4 aufgrund der gewählten Darstellung im Querschnitt gezeigt. Auf diese Weise sind die bereits erwähnten Abschnitte 4.1 bis 4.3 mit ihren jeweils unterschiedlich ausgebildeten ersten und zweiten Seiten 4a, 4b gut erkennbar. In dem ersten Abschnitt 4.1 weisen die Trägerelemente 4 auf der ersten Seite 4a eine flache Ausgestaltung 4aa zum Anlegen an den Geflechtschlauch 7 und auf der zweiten Seite 4b eine Ausnehmung 4ba auf. In dem zweiten Abschnitt 4.2 weisen die Trägerelemente 4 auf der ersten Seite 4a einen Vorsprung 4ab zum Eingreifen in die Ausnehmung 4ba und auf der zweiten Seite 4b eine entsprechende Ausnehmung 4bb auf. Im weiteren Verlauf des zweiten Abschnitt 4.2 kann das Trägerelement mit den Vorsprüngen 4ab in die genannte Ausnehmung 4bb eingreifen. In dem dritten Abschnitt 4.3 weisen die Trägerelemente 4 auf der ersten Seite 4a wiederum einen Vorsprung 4ac und auf der zweiten Seite 4b eine Abstandhalterstruktur 4bc auf. Die Abstandhalterstruktur 4bc ist endständig konvex (pilzförmig) ausgebildet zum Abstützen der Außenleitung 8. Des Weiteren besitzt die Abstandhalterstruktur 4bc seitliche Ausnehmungen 4d, im Bereich welcher Ausnehmungen 4d der bereits erwähnte Durchbruch 4c angeordnet ist.

Die Lagen 1a der beiden Isolierungen 1 überlappen einander in einem Bereich B, sodass ein Schiebesitz gebildet ist. Dies erhöht die Beweglichkeit der Leitungsanordnung 5.

Zwischen den paarweise in Eingriff stehenden Ausnehmungen und Vorsprüngen der Trägerelemente 4, wie vorstehend beschrieben, ist jeweils eine Lage 1a der Isolierungen 1 klemmend gehalten.

Der Draht 9 kann dafür verwendet werden, die Trägerelemente 4 im Bereich der Abstandhalterstrukturen 4bc zu verformen, um eine Ausdehnung der Trägerelemente 4 in radialer Richtung zu verringern, sodass eine Montage der Außenleitung 8 erleichtert ist. Anschließend kann der Draht 9 Richtung des Pfeils P entfernt werden.

Der Zwischenraum zwischen Innenleitung 6 und Außenleitung 8 ist evakuiert, um Wärmeeinträge durch Konvektion und Konduktion zu unterbinden.

In Figur 5 ist eine abweichende Ausgestaltung der Leitungsanordnung 5 gezeigt, die sich jedoch nur in Bezug auf die Ausgestaltung der Isolierung 1 von der Ausgestaltung in Figur 4 unterscheidet.

Gemäß Figur 5 weisen die einzelnen Lagen 1a der Isolierung 1, die beim Aufwickeln entstanden sind, bei Bezugszeichen 1b jeweils einen Falz auf, welcher Falz 1b eine Längenreserve für Bewegungen insbesondere in axialer Richtung darstellt.

Abweichend von der Ausgestaltung in den Figuren 4 und 5 können die Trägerelemente 4 in dem ersten Bereich 4.1 auf der ersten Seite 4a eine zu der Wellung des inneren Ringwellschlauchs (Innenleitung 6) komplementäre Ausformung aufweisen - insbesondere, wenn kein Geflechtschlauch 7 zum Einsatz kommt. Gleiches gilt für die Abstandhalterstruktur 4bc im Bereich der mit dem äußeren Ringwellschlauch (Außenleitung 8) in Berührung kommenden Außenseite.

## Patentansprüche

1. Isolierung (1) für eine kryogene Leitungsanordnung (5), aufweisend:
eine Grundfolie (2);
eine Schirmfolie (3);
welche Grundfolie (2) aus einem Material mit geringer Wärmeleitfähigkeit von vorzugsweise etwa 0,01 bis 0,3 W/(m·K) gebildet ist;
welche Schirmfolie (3) zur Reflektion von Strahlung im Infrarotbereich ausgebildet ist, vorzugsweise bei einer Wellenlänge von 0,78 bis 1000 µm, höchst vorzugsweise 3 bis 50 µm;
**dadurch gekennzeichnet, dass**
die Schirmfolie (3) in Form von mehreren diskreten Abschnitten (3a) auf der Grundfolie (2) angeordnet ist, sodass zwischen zwei benachbarten Abschnitten (3a) jeweils ein freier Abstand (A) verbleibt.

2. Isolierung (1) nach Anspruch 1, bei der die Schirmfolie (3) auf die Grundfolie (2) aufgeklebt oder durch Nähen, Falzen oder Clinchen auf der Grundfolie (2) befestigt ist.

3. Isolierung (1) nach Anspruch 1 oder 2, bei der die Schirmfolie (3) in Form von Streifen (3a) auf der Grundfolie (2) angeordnet ist, vorzugsweise in Form regelmäßig angeordneter Streifen (3a) mit jeweils gleicher Breite und/oder mit gleichem, konstantem Abstand (A) zwischen den Streifen (3a).

4. Isolierung (1) nach einem der Ansprüche 1 bis 3, bei der das Material für die Grundfolie (2) ein Glasfaservlies oder ein Kunststoff, vorzugsweise Kunststofftextil, ist und/oder bei der das Material für die Schirmfolie (3) ein reines Metall ist, vorzugsweise Kupfer, Aluminium, Gold oder Silber, oder bei der die Schirmfolie (3) als eine metallisierte Kunststofffolie ausgebildet ist.

5. Isolierte Leitungsanordnung (5) mit einer Isolierung (1) nach einem der Ansprüche 1 bis 4, aufweisend:
eine Innenleitung (6);
eine Außenleitung (8);
bei der die Isolierung (1) spiralförmig umfänglich und mit einer axialen Verlaufskomponente um die Innenleitung (6) gewickelt ist, und
bei der die Außenleitung (8) die Innenleitung (6) und die Isolierung (1) umgibt.

6. Isolierte Leitungsanordnung (5) nach Anspruch 5 mit wenigstens einem Trägerelement (4), das entlang seiner Längserstreckung aufweist:
a) einen ersten Abschnitt (4.1), in dem das Trägerelement (4) auf einer ersten Seite (4a) eine Anlagestruktur (4aa) zum vorzugsweise formschlüssigen Anlegen an eine zu isolierende Innenleitung (6) und auf einer der ersten Seite (4a) gegenüberliegenden zweiten Seite (4b) eine erste Verbindungsstruktur (4ba) aufweist, vorzugsweise eine Ausnehmung;
b) einen zweiten Abschnitt (4.2), in dem das Trägerelement (4) auf der ersten Seite (4a) eine zweite Verbindungsstruktur (4ab) zum vorzugsweise formschlüssigen Zusammenwirken mit der ersten Verbindungsstruktur (4ba) auf der zweiten Seite (4b) aufweist, vorzugsweise einen Vorsprung; und
c) einen dritten Abschnitt (4.3), in dem das Trägerelement (4) auf der ersten Seite (4a) die zweite Verbindungsstruktur (4ac) und auf der zweiten Seite (4b) eine Abstandhalterstruktur (4bc) zum vorzugsweise formschlüssigen Zusammenwirken mit einer die Innenleitung (6) umgebenden Außenleitung (8) aufweist;
wobei vorzugsweise das Trägerelement in einem flexiblen, um die Innenleitung (6) herum wickelbaren Material, vorzugsweise Kunststoff, höchst vorzugsweise PEEK, Polyetheretherketon, ausgebildet ist;
bei der das Trägerelement (4) zusammen mit der Isolierung (1) um die Innenleitung (6) gewickelt ist, wobei das Trägerelement (4) bei einer bestimmten axialen Position spiralförmig auf die Innenleitung (6) aufgewickelt ist, sodass zwischen zwei Wicklungen des Trägerelements (4) jeweils eine Lage (1a) der Isolierung (1) angeordnet ist.

7. Isolierte Leitungsanordnung (5) nach Anspruch 6, bei der das Trägerelement (4)
a) in dem ersten Abschnitt (4.1) auf der ersten Seite (4a) eben ausgebildet ist und auf der zweiten Seite (4b) eine Ausnehmung (4ba) aufweist, oder welches in dem ersten Abschnitt (4.1) auf der ersten Seite (4a) eine zu der Wellung eines Wellschlauchs zumindest teilweise komplementäre Ausgestaltung und auf der zweiten Seite (4b) eine Ausnehmung (4ba) aufweist; und
b) in dem zweiten Abschnitt (4.2) auf der ersten Seite (4a) einen zu der Ausnehmung (4ba) in dem ersten Abschnitt (4.1) komplementären Vorsprung (4ab) und auf der zweiten Seite (4b) eine Ausnehmung (4bb) aufweist, vorzugsweise eine mit der Ausnehmung (4ab) in dem ersten Abschnitt (4.1) identische Ausnehmung (4bb); und
c) in dem dritten Abschnitt (4.3) auf der ersten Seite (4a) einen zu der Ausnehmung (4bb) in dem zweiten Abschnitt (4.2) komplementären Vorsprung (4ac) und auf der zweiten Seite (4b) die Abstandhalterstruktur (4bc) aufweist.

8. Isolierte Leitungsanordnung (5) nach Anspruch 6 oder 7, bei der
das Trägerelement (4) derart ausgebildet ist, dass bei einem spiralförmigen Aufwickeln des Trägerelements (4) die erste Verbindungsstruktur (4ba) in dem ersten Abschnitt (4.1) und die zweite Verbindungsstruktur (4ab) in dem zweiten Abschnitt (4.2) und/oder die erste Verbindungsstruktur (4ba) in dem zweiten Abschnitt (4.2) und die zweite Verbindungsstruktur (4ac) in dem dritten Abschnitt (4.3) verbindend zusammenwirken, bevorzugt jeweils paarweise miteinander in Eingriff stehen;
wobei vorzugsweise zwischen den zusammenwirkenden Verbindungsstrukturen wenigstens eine Lage (1a) der Isolierung (1) anordenbar ist.

9. Isolierte Leitungsanordnung (5) nach einem der Ansprüche 6 bis 8, bei der die Abstandhalterstruktur (4bc) einen Durchbruch (4c) aufweist, welcher Durchbruch (4c) vorzugsweise quer zu einer Längserstreckung des Trägerelements (4) und parallel zu den ersten und zweiten Seiten (4a, 4b) orientiert ist, und/oder bei dem die Abstandhalterstruktur (4bc) mit wenigstens einer seitlichen Ausnehmung (4d) versehen ist.

10. Isolierte Leitungsanordnung (5) nach einem der Ansprüche 6 bis 9, bei der die Abstandhalterstruktur (4bc) außen konvex oder mit einer zu der Wellung eines Wellschlauchs zumindest teilweise komplementärer Formgebung ausgebildet ist.

11. Isolierte Leitungsanordnung (5) nach einem der Ansprüche 6 bis 10, bei der die Außenleitung (8) außen an der Abstandhalterstruktur (4bc) oder den Abstandhalterstrukturen anliegt und/oder bei der die Isolierung (1) entlang der Leitungsanordnung (5) einen oder mehrere Falze (1b) aufweist, bevorzugt jeweils mindestens einen Falz (1b) zwischen zwei Trägerelementen (4).

12. Isolierte Leitungsanordnung (5) nach einem der Ansprüche 6 bis 11, bei der die Isolierung (1) entlang der Leitungsanordnung aus mehreren getrennten Abschnitten gebildet ist, welche Abschnitte sich kämmend überlappen und dadurch einen Schiebesitz bilden.

13. Isolierte Leitungsanordnung (5) nach einem der Ansprüche 6 bis 12, bei der die Innenleitung (6) und/oder die Außenleitung (8) als Wellschlauch ausgebildet ist/sind, vorzugsweise als Ringwellschlauch, höchst vorzugsweise aus Metall, beispielsweise Stahl oder Edelstahl, und/oder bei der die Innenleitung (6) mit einer Geflechtummantelung (7) versehen ist, vorzugsweise aus einem monofilen Geflecht, und bei der die Isolierung oder - bei Rückbezug auf Anspruch 6 - das Trägerelement (4) um die Geflechtummantelung gewickelt ist.

14. Verfahren zum thermischen Isolieren einer Leitungsanordnung (5) mit einer Isolierung (1) nach einem der Ansprüche 1 bis 4, bei dem:
a) die Isolierung (1) spiralförmig umfänglich und mit einer axialen Verlaufskomponente um eine Innenleitung (6) gewickelt wird; und dann
b) eine Außenleitung (8) um die Innenleitung (6) und die Isolierung (1) herum angeordnet wird;
wobei optional und unter Verwendung wenigstens eines Trägerelements (4) gemäß einem der Ansprüche 6 bis 10 in Schritt a) das Trägerelement (4) zusammen mit der Isolierung (1) um die Innenleitung (6) gewickelt wird, wobei das Trägerelement (4) bei einer bestimmten axialen Position spiralförmig vorzugsweise direkt auf die Innenleitung (6) aufgewickelt wird, sodass eine Lage (1a) der Isolierung (1) jeweils zwischen zwei Wicklungen des Trägerelements (4) angeordnet wird, vorzugsweise eingeklemmt.

15. Verfahren nach Anspruch 14, bei dem bei Verwendung wenigstens eines Trägerelements (4) gemäß einem der Ansprüche 6 bis 10 vor Schritt b) die Abstandhalterstruktur (4bc) des Trägerelements (4) in ihrer radialen Erstreckung verringert wird, bevorzugt durch Torsion, wobei höchst vorzugsweise ein Zustand mit verringerter radialer Erstreckung temporär fixiert wird, bevorzugt und bei Rückbezug auf Anspruch 9 mittels eines fadenförmigen Elements (9), das durch den Durchbruch (4c) geführt wird, und bei dem nach Schritt b) die Verringerung der radialen Erstreckung beseitigt wird, insbesondere durch Entfernen des fadenförmigen Elements (9).

## Claims

1. An insulator (1) for a cryogenic line arrangement (5), having:
a base film (2);
a shielding film (3);
which base film (2) is formed from a material with a low thermal conductivity of preferably about 0.01 to 0.3 W/(m K);
which shielding film (3) is designed to reflect radiation in the infrared range, preferably at a wavelength of 0.78 to 1000 µm, most preferably 3 to 50 µm;
**characterized in that** the shielding film (3) is arranged on the base film (2) in the form of multiple discrete sections (3a), so that a free space (A) remains respectively between two adjacent sections (3a).

2. The insulator (1) according to claim 1, wherein the shielding film (3) is glued to the base film (2) or attached to the base film (2) by sewing, folding or clinching.

3. The insulator (1) according to claim 1 or 2, wherein the shielding film (3) is arranged in the form of strips (3a) on the base film (2), preferably in the form of regularly arranged strips (3a) each having the same width and/or having the same, constant spacing (A) between the strips (3a).

4. The insulator (1) according to any one of claims 1 to 3, wherein the material for the base film (2) is a glass fibre fleece or a plastic, preferably a plastic textile, and/or wherein the material for the shielding film (3) is a pure metal, preferably copper, aluminium, gold or silver, or wherein the shielding film (3) is designed as a metallized plastic film.

5. An insulated line arrangement (5) with an insulator (1) according to any one of claims 1 to 4, having:
an inner line (6);
an external line (8);
wherein the insulator (1) is wound around the inner line (6) in a spiral and with an axial course component, and
wherein the outer line (8) surrounds the inner line (6) and the insulator (1).

6. The insulated line arrangement (5) according to claim 5 with at least one carrier element (4), which has along its longitudinal extension:
a) a first section (4.1), wherein the carrier element (4) has on a first side (4a) a contact structure (4aa) for preferably form-fit contact with an inner line (6) to be insulated and on a second side (4b) opposite the first side (4a) a first connecting structure (4ba), preferably a recess;
b) a second section (4.2), wherein the carrier element (4) on the first side (4a) has a second connecting structure (4ab) for preferably form-fitting cooperation with the first connecting structure (4ba) on the second side (4b), preferably a projection; and
c) a third section (4.3), wherein the carrier element (4) has the second connecting structure (4ac) on the first side (4a) and a spacer structure (4bc) on the second side (4b) for preferably form-fitting cooperation with an outer line (8) surrounding the inner line (6);
wherein preferably the carrier element is designed in a flexible material, preferably plastic, most preferably PEEK, polyether ether ketone, which can be wound around the inner line (6);
wherein the carrier element (4) together with the insulator (1) is wound around the inner line (6), the carrier element (4) being wound spirally onto the inner line (6) at a specific axial position, so that a layer (1a) of the insulator (1) is respectively arranged between two windings of the carrier element (4).

7. The insulated line arrangement (5) according to claim 6, wherein the carrier element (4)
a) is designed flat in the first section (4.1) on the first side (4a) and has a recess (4ba) on the second side (4b), or which has in the first section (4.1) on the first side (4a) a configuration which is at least partially complementary to the corrugation of a corrugated hose and has a recess (4ba) on the second side (4b); and
b) has in the second section (4.2) on the first side (4a) a projection (4ab) complementary to the recess (4ba) in the first section (4.1) and on the second side (4b) a recess (4bb), preferably a recess (4bb) identical to the recess (4ab) in the first section (4.1); and
c) in the third section (4.3) on the first side (4a) has a projection (4ac) complementary to the recess (4bb) in the second section (4.2) and on the second side (4b) has the spacer structure (4bc).

8. The insulated line arrangement (5) according to claim 6 or 7, wherein
the carrier element (4) is designed in such a way that, when the carrier element (4) is wound up in a spiral, the first connecting structure (4ba) in the first section (4.1) and the second connecting structure (4ab) in the second section (4.2) and/or the first connecting structure (4ba) in the second section (4.2) and the second connecting structure (4ac) in the third section (4.3) cooperate in a connecting manner, preferably each engaging with each other in pairs;
wherein preferably at least one layer (1a) of the insulator (1) can be arranged between the cooperating connecting structures.

9. The insulated line arrangement (5) according to any one of claims 6 to 8, wherein the spacer structure (4bc) has an aperture (4c), which aperture (4c) is preferably oriented transversely to a longitudinal extension of the carrier element (4) and parallel to the first and second sides (4a, 4b), and/or wherein the spacer structure (4bc) is provided with at least one lateral recess (4d).

10. The insulated line arrangement (5) according to any one of claims 6 to 9, wherein the spacer structure (4bc) is convex on the outside or has a shape that is at least partially complementary to the corrugation of a corrugated hose.

11. The insulated line arrangement (5) according to any one of claims 6 to 10, wherein the outer line (8) bears externally against the spacer structure (4bc) or the spacer structures and/or wherein the insulator (1) has one or more folds (1b) along the line arrangement (5), preferably at least one fold (1b) in each case between two carrier elements (4).

12. The insulated line arrangement (5) according to any one of claims 6 to 11, wherein the insulator (1) along the line arrangement is formed from multiple separate sections, which sections overlap in a combing manner and thereby form a sliding fit.

13. The insulated line arrangement (5) according to any one of claims 6 to 12, wherein the inner line (6) and/or the outer line (8) is/are designed as a corrugated hose, preferably as a corrugated ring hose, most preferably made of metal, for example steel or stainless steel, and/or wherein the inner line (6) is provided with a braided sheathing (7), preferably of a monofilament braid, and wherein the insulator or - with reference back to claim 6 - the carrier element (4) is wound around the braided sheathing.

14. A method for thermally insulating a line arrangement (5) with an insulator (1) according to any one of claims 1 to 4, wherein:
a) the insulator (1) is wound spirally circumferentially and with an axial course component around an inner line (6); and then
b) an outer line (8) is arranged around the inner line (6) and the insulator (1);
wherein optionally and using at least one carrier element (4) according to any one of claims 6 to 10 in step a) the carrier element (4) together with the insulator (1) is wound around the inner line (6), wherein the carrier element (4) is wound in a spiral preferably directly onto the inner line (6) at a certain axial position, so that a layer (1a) of the insulator (1) is respectively arranged between two windings of the carrier element (4), preferably clamped.

15. The method according to claim 14, wherein, when using at least one carrier element (4) according to any one of claims 6 to 10, the spacer structure (4bc) of the carrier element (4) is reduced in its radial extent before step b), preferably by torsion, a state with reduced radial extent being most preferably temporarily fixed, preferably and with reference back to claim 9 by means of a thread-like element (9) which is guided through the aperture (4c), and wherein after step b) the reduction in the radial extent is eliminated, in particular by removing the thread-like element (9).

## Revendications

1. Isolation (1) pour un ensemble de conduites (5) cryogénique présentant :
un film de base (2) ;
un film de protection (3) ;
lequel film de base (2) est formé d'un matériau avec une faible conductivité thermique de préférence d'environ 0,01 à 0,3 W/(m K) ;
lequel film de protection (3) est formé pour la réflexion d'un rayonnement dans la plage infrarouge, de préférence à une longueur d'onde de 0,78 à 1 000 µm, au plus de préférence de 3 à 50 µm ;
**caractérisée en ce que** le film de protection (3) est agencé sous la forme de plusieurs sections (3a) discrètes sur le film de base (2) de sorte que respectivement une distance libre (A) subsiste entre deux sections (3a) contiguës.

2. Isolation (1) selon la revendication 1, pour laquelle le film de protection (3) est collé sur le film de base (2) ou est fixé par couture, pliage ou clinchage sur le film de base (2).

3. Isolation (1) selon la revendication 1 ou 2, pour laquelle le film de protection (3) est agencé sous la forme de bandes (3a) sur le film de base (2), de préférence sous la forme de bandes (3a) agencées régulièrement avec une largeur respectivement identique et/ou à une distance constante identique (A) entre les bandes (3a).

4. Isolation (1) selon l'une quelconque des revendications 1 à 3, pour laquelle le matériau pour le film de base (2) est une toile de fibre de verre ou une matière plastique, de préférence un textile plastique et/ou pour laquelle le matériau pour le film de protection (3) est un métal pur, de préférence du cuivre, de l'aluminium, de l'or ou de l'argent, ou pour laquelle le film de protection (3) est formé comme un film de matière plastique métallisé.

5. Ensemble de conduites isolé (5) avec une isolation (1) selon l'une quelconque des revendications 1 à 4, présentant :
une conduite intérieure (6) ;
une conduite extérieure (8) ;
pour lequel l'isolation (1) est enroulée en spirale sur la périphérie et avec un composant d'étendue axial autour de la conduite intérieure (6) et
pour lequel la conduite extérieure (8) entoure la conduite intérieure (6) et l'isolation (1).

6. Ensemble de conduites isolé (5) selon la revendication 5 avec au moins un élément porteur (4) qui présente le long de son étendue longitudinale :
a) une première section (4.1), dans laquelle l'élément porteur (4) présente sur un premier côté (4a) une structure d'appui (4aa) pour l'appui de préférence par complémentarité de formes contre une conduite intérieure (6) à isoler et sur un second côté (4b) opposé au premier côté (4a) une première structure de liaison (4ba), de préférence un évidement ;
b) une deuxième section (4.2), dans laquelle l'élément porteur (4) présente sur le premier côté (4a) une seconde structure de liaison (4ab) pour la coopération de préférence par complémentarité de formes avec la première structure de liaison (4ba) sur le second côté (4b), de préférence une saillie ; et
c) une troisième section (4.3), dans laquelle l'élément porteur (4) présente sur le premier côté (4a) la seconde structure de liaison (4ac) et sur le second côté (4b) une structure d'élément d'écartement (4bc) pour la coopération de préférence par complémentarité de formes avec une conduite extérieure (8) entourant la conduite intérieure (6) ;
dans lequel l'élément porteur est de préférence formé dans un matériau flexible, enroulable autour de la conduite intérieure (6), de préférence un matériau plastique, au plus de préférence du PEEK, polyétheréthercétone ;
pour lequel l'élément porteur (4) est enroulé conjointement avec l'isolation (1) autour de la conduite intérieure (6), dans lequel l'élément porteur (4) est enroulé en spirale sur la conduite intérieure (6) pour une position axiale déterminée de sorte que respectivement une couche (1a) de l'isolation (1) soit agencée entre deux enroulements de l'élément porteur (4).

7. Ensemble de conduites isolé (5) selon la revendication 6, pour lequel l'élément porteur (4)
a) est formé de manière plane dans la première section (4.1) sur le premier côté (4a) et présente sur le second côté (4b) un évidement (4ba) ou qui présente dans la première section (4.1) sur le premier côté (4a) une configuration au moins partiellement complémentaire à l'ondulation d'un tuyau ondulé et sur le second côté (4b) un évidement (4ba) ; et
b) présente dans la deuxième section (4.2) sur le premier côté (4a) une saillie (4ab) complémentaire à l'évidement (4ba) dans la première section (4.1) et sur le second côté (4b) un évidement (4bb), de préférence un évidement (4bb) identique avec l'évidement (4ab) dans la première section (4.1) ; et
c) présente dans la troisième section (4.3) sur le premier côté (4a) une saillie (4ac) complémentaire à l'évidement (4bb) dans la deuxième section (4.2) et sur le second côté (4b) la structure d'élément d'écartement (4bc).

8. Ensemble de conduites isolé (5) selon la revendication 6 ou 7, pour lequel
l'élément porteur (4) est formé de telle manière que pour un enroulement en spirale de l'élément porteur (4), la première structure de liaison (4ba) dans la première section (4.1) et la seconde structure de liaison (4ab) dans la deuxième section (4.2) et/ou la première structure de liaison (4ba) dans la deuxième section (4.2) et la seconde structure de liaison (4ac) dans la troisième section (4.3) coagissent par liaison, de préférence sont en prise entre elles respectivement par paires ;
dans lequel au moins une couche (1a) de l'isolation (1) peut être agencée de préférence entre les structures de liaison coagissantes.

9. Ensemble de conduites isolé (5) selon l'une quelconque des revendications 6 à 8, pour lequel la structure d'élément d'écartement (4bc) présente une interruption (4c), laquelle interruption (4c) est orientée de préférence transversalement à une étendue longitudinale de l'élément porteur (4) et parallèlement aux premier et second côtés (4a, 4b) et/ou pour lequel la structure d'élément d'écartement (4bc) est pourvue d'au moins un évidement (4d) latéral.

10. Ensemble de conduites isolé (5) selon l'une quelconque des revendications 6 à 9, pour lequel la structure d'élément d'écartement (4bc) est formé à l'extérieur de manière convexe ou avec une formation au moins partiellement complémentaire à l'ondulation d'un tuyau ondulé.

11. Ensemble de conduites isolé (5) selon l'une quelconque des revendications 6 à 10, pour lequel la conduite extérieure (8) repose à l'extérieur contre la structure d'élément d'écartement (4bc) ou les structures d'élément d'écartement et/ou pour lequel l'isolation (1) présente le long de l'ensemble de conduites (5) un ou plusieurs plis (1b), de préférence respectivement au moins un pli (1b) entre deux éléments porteurs (4).

12. Ensemble de conduites isolé (5) selon l'une quelconque des revendications 6 à 11, pour lequel l'isolation (1) est formé le long de l'ensemble de conduites de plusieurs sections séparées, lesquelles sections se chevauchent par engrènement et forment ainsi un siège coulissant.

13. Ensemble de conduites isolé (5) selon l'une quelconque des revendications 6 à 12, pour lequel la conduite intérieure (6) et/ou la conduite extérieure (8) est formée comme tuyau ondulé, de préférence comme tuyau ondulé et annulaire, au plus de préférence en métal, par exemple en acier ou acier noble, et/ou pour lequel la conduite intérieure (6) est pourvue d'une enveloppe tressée (7), de préférence d'une tresse monofil, et pour lequel l'isolation ou - en référence à la revendication 6 - l'élément porteur (4) est enroulé autour de l'enveloppe tressée.

14. Procédé d'isolation thermique d'un ensemble de conduites (5) avec une isolation (1) selon l'une quelconque des revendications 1 à 4, pour lequel :
a) l'isolation (1) est enroulée en spirale sur la périphérie et avec un composant d'étendue axial autour de la conduite intérieure (6) ; et ensuite
b) une conduite extérieure (8) est agencée autour de la conduite intérieure (6) et de l'isolation (1) ;
dans lequel éventuellement et en utilisant au moins un élément porteur (4) selon l'une quelconque des revendications 6 à 10 à l'étape a), l'élément porteur (4) est enroulé conjointement avec l'isolation (1) autour de la conduite intérieure (6), dans lequel l'élément porteur (4) est enroulé en spirale de préférence directement sur la conduite intérieure (6) pour une position axiale déterminée de sorte qu'une couche (1a) de l'isolation (1) soit agencée respectivement entre deux enroulements de l'élément porteur (4), de préférence serrée.

15. Procédé selon la revendication 14, pour lequel lors de l'utilisation au moins d'un élément porteur (4) selon l'une quelconque des revendications 6 à 10 avant l'étape b), la structure d'élément d'écartement (4bc) de l'élément porteur (4) est réduite dans son étendue radiale, de préférence par torsion, dans lequel au plus de préférence un état avec une étendue radiale réduite est temporairement fixé, de préférence et en référence à la revendication 9 au moyen d'un élément (9) en forme de fil qui traverse l'interruption (4c), et pour lequel après l'étape b), la réduction de l'étendue radiale est éliminée, en particulier par retrait de l'élément (9) en forme de fil.
